# EUROPÄISCHE PATENTSCHRIFT

(11) **EP 0 924 493 B1**
(45) Veröffentlichungstag und Bekanntmachung des Hinweises auf die Patenterteilung: **06.11.2002**
(21) Anmeldenummer: 98123627.6
(22) Anmeldetag: 10.12.1998
(51) Int. Cl.: G01B 11/08, G01B 121/06, B29C 47/92

(54) **Durchmessermessung mit Beugungssäumen sowie elektronische Verschmutzungskorrektur**
Measurement of diameter using diffraction borders and electronic soiling correction
Mesurement du diamètre avec des bords de diffraction et correction électronique d'une pollution

(30) Priorität: 20.12.1997 DE 19757067
(43) Veröffentlichungstag der Anmeldung: 23.06.1999
(73) Patentinhaber: SIKORA INDUSTRIEELEKTRONIK GMBH, D-28307 Bremen (DE)
(72) Erfinder: Blohm, Werner Dr.-Ing., 28359 Bremen (DE); Sikora, Harald, 28307 Bremen (DE); Beining, Adrian, 27367 Bötersen (DE)
(74) Vertreter: Patentanwälte Hauck, Graalfs, Wehnert, Döring, Siemons, Schildberg

(56) Entgegenhaltungen:
- EP-B- 0 433 553
- DE-A- 4 023 610
- US-A- 4 775 236
- US-A- 5 015 867
- H.ACKERMANN ET AL.: "Vermessung von Drehteilen durch Beugungsmusteranalyse" TECHNISCHES MESSEN, Bd. 63, Nr. 3, 1996, Seiten 83-91, XP000559689

## Beschreibung

Die Erfindung bezieht sich auf ein Verfahren zur Messung des Durchmessers eines Stranges, insbesondere eines Kabels kleineren Durchmessers nach dem Obergriff des Patentanspruchs 1.

Es ist aus EP-A-0 433 553 B1 bekannt, den Durchmesser und die Exzentrizität von Kabeln oder anderen Strängen auf optischem Weg dadurch zu bestimmen, daß der Strang mit dem Licht einer Lichtquelle bestrahlt wird, wobei die Hauptstrahlrichtung annähernd senkrecht auf der Längsachse des Stranges steht. Auf der gegenüberliegenden Seite wird das Licht unter Einsatz brechender Flächen (Linsen, Objektive etc.) auf einen zellenförmigen, lichtempfindlichen Sensor projiziert, wobei das Meßobjekt einen Schatten auf den Zeilensensor wirft. Die Schattengrenzen werden erfaßt; ihr Abstand ist ein Maß für den Durchmesser.

Bei der praktischen Anwendung der bekannten Vorrichtung werden die durch Verunreinigungen an Lichtein- und -austrittsöffnungen belastet. Es ist daher auch bekannt, die Optik so zu wählen, daß an der Lichtein- und -austrittsöffnung das Bild defokussiert wird. Partielle Verunreinigungen beeinflussen die Messung dann nur bedingt.

Die bekannten optischen Vorrichtungen arbeiten im Prinzip zufriedenstellend, sind jedoch relativ aufwendig und groß bauend.

Aus US-A-5 015 867 ist für textile Fasern bekannt geworden, diese mit einem Laserstrahl zu bestrahlen und deren Durchmesser über die Auswertung der Beugungssäume zu ermitteln, die durch an den Rändern des vom Strang verursachten Schattens auftreten.

Der Erfindung liegt daher die Aufgabe zugrunde, ein Verfahren zur Messung des Durchmessers eines im Querschnitt annähernd kreisförmigen Stranges, insbesondere einer Ader oder eines Kabels kleineren Durchmessers, anzugeben, das mit minimalem Aufwand auskommt, gleichwohl sehr genaue Ergebnisse bringt, obwohl der Strang sich in seiner Lage quer zu seiner Längserstreckung in Grenzen verändert.

Diese Aufgabe wird durch die Merkmale des Patentanspruchs 1 gelöst.

Bei dem erfindungsgemäßen Verfahren wird der Strang mit dem fächerförmigen Strahl einer monochromatischen punktförmigen Lichtquelle bestrahlt. Auf die Zwischenschaltung von optischen Elementen zwischen Lichtquelle und Strang und dem Strang und dem Sensor kann gegebenenfalls verzichtet werden. Eine Bündelung, Parallelisierung oder sonstige Beeinflussung oder Verformung des Strahls kann entfallen. Der Schatten des Strangs wird auf einen zeilenförmigen lichtempfindlichen Sensor an sich bekannter Bauart projiziert. Beispielsweise kann eine sog. CCD-Zeile verwendet werden, die etwa 2048 einzelne lichtempfindliche Elemente in einem Abstand von 14 µm aufweist. Ein derartiger Sensor weist eine hohe Auflösung auf.

Es versteht sich, daß auch ein mehrzeiliger Sensor (Flächensensor) entsprechender Auflösung zum Einsatz kommen kann. Dessen Zeilen werden dann separat ausgewertet.

Die gemessenen durch Beugung verursachten Signale geben einen Aufschluß über die Lage der Beugungskante im Meßraum. Dies macht sich die Erfindung zunutze. Aufgrund von Beugungserscheinungen ergeben z. B. sich die geometrischen Schattengrenzen aus dem Intensitätsverlauf der auf dem Sensor auftreffenden Strahlung nicht unmittelbar, sie müssen vielmehr aus den sich einstellenden Beugungssäumen abgeleitet werden. Dies kann durch Vergleich mit einem aus der Theorie der Fresnel-Beugung bekannten Verlauf *f*(ξ) der Intensität im Beugungssaum ermittelt werden. Hierbei gilt für das Argument der Funktion *f*(ξ) : ξ = *d*(*x-x*_{*geo*}). Der Intensitätsverlauf im Beugungssaum bei einem vorgegebenen Abstand der beugenden Kante vom Empfangssensor wird z. B. als Standardverlauf (Basisverlauf) mit der Dehnung *d*=1 gewählt. Denn eine mathematische Beschreibung des Intensitätsverlaufs ist nicht ohne weiteres möglich. Die in ξ enthaltenen freien Parameter *d* (Dehnung des Basisverlaufs *f*(ξ_{*0*})) und *x*_{geo} (gesuchte geometrische Schattengrenze = Verschiebung des Basisverlaufs *f*(ξ_{*0*})) werden solange variiert, bis sich eine optimale Korrelation zwischen *f*(ξ) und dem Verlauf der Intensität im gemessenen Beugungssaum einstellt.

Alternativ können auch aus diskreten Werten für d und *x*_{geo} erzeugte Musterverläufe *f*(ξ₁), *f*(ξ₂),... *f*(ξ_{N}) abgelegt werden, um dann mit dem Intensitätsverlauf im gemessenen Beugungssaum zur Deckung gebracht zu werden (Mustervergleich).

Eine weitere Möglichkeit besteht erfindungsgemäß darin, nur wenige charakteristische Merkmalspunkte in den Beugungssäumen (z. B. Wendepunkte und/oder lokale Intensitätsminima und -maxima) zur Bestimmung der geometrischen Schattengrenzen heranzuziehen. Die Lage der Merkmalspunkte im Intensitätsverlauf des Beugungssaums ist charakteristisch für die Lage der Beugungskanten im Meßraum, z. B. für die der Schattengrenzen. Auch die Steigung zwischen Merkmalspunkten des Intensitätsverlaufs, z. B. im Bereich der geometrischen Schattengrenze (z. B. bis zum ersten Maximum) ermöglicht die Bestimmung des Durchmessers bzw. der Lage der geometrischen Schattengrenze.

Bei fächerförmig sich ausbreitender Lichtstrahlung ist zur Bestimmung des Strangdurchmessers aus den geometrischen Schattengrenzen die Kenntnis des Abstands des Meßobjekts senkrecht zum Zeilensensor erforderlich. Die Lage des Stranges quer zu seiner Längserstreckung während der Messung kann sich nämlich ändern. Dies ist z. B. bei Kabeln der Fall während ihrer Bewegung vom Produktionsort zu einer Aufwickelvorrichtung. Dabei ändert sich nicht nur der Abstand der Schattengrenzen aufgrund des Strahlensatzes, vielmehr ändert sich auf der Außenkontur des Stranges auch die Lage der Kanten, die die Beugung verursachen. Diese Kanten liegen nämlich dort, wo zwei von der Lichtquelle ausgehende Strahlen die Außenkontur links bzw. rechts in Form von Tangenten berühren. Beide Beugungskanten liegen mithin auf einer Sehne des als kreisförmig angenommenen Strangquerschnitts. Diese Sehne kann als Ersatzblende aufgefaßt werden. Je näher der Strang zur Lichtquelle liegt, um so weiter entfernt sich diese Ersatzblende vom Kreismittelpunkt des Strangquerschnitts. Zur Berücksichtigung dieses Effekts ist ebenfalls die Kenntnis des Abstands von Bedeutung.

Der erwähnte Abstand kann aus dem Beugungsverlauf ermittelt werden. Sowohl die Dehnung *d* als auch der Abstand zwischen charakteristischen Merkmalspunkten im Beugungssaum stellen hierfür ein Maß dar.

Allgemein kann die Abstandsbestimmung der Meßobjekte relativ zum Zeilensensor auch unter Zuhilfenahme beliebiger zusätzlicher Meßeinrichtungen erfolgen. Bevorzugt ist die Anwendung eines zweiten identischen Meßsystems, bestehend aus punktförmiger monochromatischer Lichtquelle und Zeilensensor mit einer Meßachse, die auf der Meßachse des ersten Meßsystems senkrecht steht. Prinzipiell können auch mehr als zwei Meßsysteme zum Einsatz kommen. So können etwa drei Systeme unter Winkeln von jeweils 120° zueinander positioniert werden.

Erfindungswesentlich ist ferner, daß die Geometrie des fächenförmigen Lichtstrahls, der Abstände von Lichtquelle, Strang und Sensor sowie der Durchmesserbereich des Stranges stets so gewählt sind, daß die Beugungseffekte von den gegenüberliegenden Rändern des Stranges sich in der Ebene des Sensors nicht gegenseitig stören.

Das erfindungsgemäße Verfahren erfordert ein außerordentlich wenig aufwendiges Meßsystem. Linsen, Objektive oder ähnliche optische Elemente, die immer auch Quelle von Abbildungsfehlern, Unschärfen usw. sind, können gegebenenfalls in Fortfall kommen. Da keine Abbildungsfehler auftreten, ist aufgrund der bekannten, mathematisch exakt beschreibbaren Physik der Beugungserscheinungen eine hoch-präzise Durchmesserbestimmung möglich. Darüber hinaus besteht ein weiterer wesentlicher Vorteil darin, daß das Meßsystem wegen des Fortfalls von brechenden Flächen außerordentlich klein baut. Es kann jedoch von Vorteil sein, zwischen der Lichtquelle und dem Strang eine optische Anordnung vorzusehen, die eine Verringerung des Abstands zwischen diesen Gegenständen ermöglicht. Dadurch baut die Meßvorrichtung noch kleiner.

Verschmutzungen im Bereich des Meßsystems führen naturgemäß zu Fehlmessungen. Diese können dadurch reduziert werden, daß die optisch aktive Zone der Lichtquelle parallel zur Längsachse des Stranges eine gewisse Ausdehnung aufweist, d.h. linienförmig ist, während sie senkrecht dazu nach wie vor ein Punktstrahler bleibt. Hat z. B. ein Diodenlaser für die erfindungsgemäße Messung in der optisch aktiven Zone eine Höhe in der Bildebene von etwa 3 µm, dann ist seine Länge, d.h. Erstreckung senkrecht zur Bildebene, z. B. 0,5 mm. Analog kann die Erstreckung der einzelnen Elemente des lichtempfindlichen Sensors parallel zur Längsachse des Stranges signifikant größer gewählt werden als die in Achsrichtung des Zeilensensors. Verschmutzungen auf der Lichtquelle bzw. dem Sensor machen sich nicht in der gleichen störenden Weise bemerkbar, wie sie auftreten würden bei einer rein punktförmigen Auslegung von Lichtquelle und Sensorelement. Durch die erfindungsgemäße Bemessung wird mithin eine Art Defokussierungseffekt erreicht.

Partielle Verschmutzungen auf der Lichtquelle, beispielsweise einer Laserdiode, einer Sammellinse oder am Bildsensor, verursachen ebenfalls Beugungseffekte, die als Beugungsbilder auf dem Sensor erscheinen. Es ist anzumerken, daß das Frequenzspektrum der durch die Beugung verursachten Intensitätsschwankungen um so höher ist, je näher deren Entstehungsort dem Sensor ist. Verunreinigungen auf dem Sensor verursachen extrem hochfrequente Intensitätsschwankungen, während solche auf der Strahlungsquelle niederfrequente Schwankungen zur Folge haben. Die vom zu messenden Gegenstand durch Beugungen verursachten Intensitätsschwankungen haben mithin ein Frequenzspektrum, das zwischen diesen Extremen liegt. Erfindungsgemäß erfolgt eine Filterung des gemessenen Intensitätsverlaufes vom Sensor dergestalt, daß möglichst nur ein Frequenzspektrum zur Auswertung gelangt, das von der Beugung des Stranges verursacht ist. Werden bei der Vorrichtung zur Durchführung des Verfahrens die Abmessungen so gewählt, daß auch unter Verwendung von Schutzgläsern zwischen Strahlungsquelle und dem zu messenden Gegenstand einerseits und zwischen dem Bild- oder Zeilensensor und dem zu messenden Gegenstand andererseits stets unterscheidbare Frequenzspektren entstehen, dann kann mit Hilfe geeigneter Filterverfahren auch bei partieller Verschmutzung in der Meßvorrichtung eine zuverlässige Messung durchgeführt werden.

Es ist ferner anzumerken, daß der Dehnungsfaktor *d* der Beugungssäume und mithin auch der Abstand zwischen charakteristischen Merkmalspunkten um so geringer ist, je näher die beugende Kante zum Empfangssensor liegt. Die Auswertung nur solcher Beugungssäume, deren Dehnungen *d* für die gültigen Lagen des Meßgutes relevant sind, reduziert somit die Schmutzempfindlichkeit und ermöglicht damit eine zuverlässigere Messung. Kommen nur charakteristische Merkmalspunkte zur Auswertung, so kann aus dem Abstand zwischen aufeinanderfolgenden Punkten gefolgert werden, ob der gemessene Beugungssaum vom Meßobjekt verursacht ist oder von z. B. Verunreinigungen in der Meßstrecke.

Werden anstelle eines einzigen Punktstrahlers mehrere eingesetzt, die entweder dicht gepackt sind oder einen mehr oder weniger großen Abstand voneinander haben, und werden diese abwechselnd betrieben, ist es möglich, den Meßbereich auszudehnen. Gleichfalls läßt sich durch geeignete Auswertung der von den jeweiligen Punktstrahlern auf der Sensorzeile hervorgehobenen Intensitätsverläufe die Schmutzempfindlichkeit reduzieren. In den einzelnen Verläufen zeigt sich nämlich ein unterschiedlicher örtlicher Versatz zwischen solchen Beugungsverläufen, die von Objekten in der gültigen Meßzone hervorgerufen werden, und denjenigen, die von außerhalb dieses Bereichs befindlichen (Schmutz-) Objekten herrühren.

Es können auch die einzelnen Intensitätsverläufe auf den Zeilen mehrzeilige Sensoren zur Reduzierung von Schmutzeinflüssen ausgenutzt werden. Zum Beispiel kann diejenige Zeile zur Bestimmung der geometrischen Schattengrenze ausgewählt werden, mit der keine oder die geringste Verunreinigung detektiert wird.

Zusätzlich zu den "elektronischen" Maßnahmen zur Reduzierung der Schmutzempfindlichkeit oder auch alternativ können Mittel vorgesehen werden, um den Einfluß von Verunreinigungen auf das Meßsystem zu minimieren. So können zum Beispiel zwischen dem Laser und dem Meßobjekt zwei beabstandete Schlitzanordnungen vorgesehen werden, zwischen denen eine Elektrode für eine elektrostatische "Absaugung" von Staub oder sonstigen Verunreinigungen angeordnet ist. In gleicher Weise kann zwischen Meßobjekt und Zeilensensor eine Elektrode vorgesehen werden. In diesem Fall liegen dann die Schlitzanordnungen an Masse. Eine andere Möglichkeit kann darin bestehen, im Meßraum ständig einen Überdruck zu erzeugen, der verhindert, daß Verunreinigungen in den Meßraum eindringen. Eine dritte Möglichkeit besteht darin, zyklisch einen Spülstoß in den Meßraum oder auf die durch Verunreinigungen gefährdeten Teile zu richten. Beispielsweise kann ein Luft-Druckstoß verwendet werden.

Die Erfindung wird nachfolgend anhand von Zeichnungen näher erläutert.
- Fig. 1: zeigt schematisch eine Meßvorrichtung zur Durchführung des erfindungsgemäßen Verfahrens.
- Fig. 2: zeigt idealisiert den Intensitätsverlauf am Strahlungsempfänger nach Fig. 1.
- Fig. 3: zeigt eine zweite Ausführungsform einer Vorrichtung zur Durchführung des erfindungsgemäßen Verfahrens.
- Fig. 4: zeigt eine dritte Ausführungsform einer Vorrichtung zur Durchführung des erfindungsgemäßen Verfahrens.
- Fig. 5: zeigt die um 90° verdrehte Vorrichtung nach Fig. 4.
- Fig. 6: zeigt eine vierte Ausführungsform einer Vorrichtung zur Durchführung des erfindungsgemäßen Verfahrens.
- Fig. 7: zeigt eine Ausführungsform mit elektrostatischer Entfernung von Schmutzpartikel aus dem Sichtbereich des Meßsystems.
- Fig. 8: zeigt die in Fig. 7 dargestellte Ausführungsform von oben.
- Fig. 9: zeigt eine weitere Ausführungsform, in der Schmutzpartikel durch eine Luftspülung aus dem Sichtbereich des Meßsystems entfernt werden.
- Fig. 10: zeigt eine ähnliche Darstellung wie Fig. 7 mit einer geringfügigen Abwandlung.
- Fig. 11: zeigt eine ähnliche Darstellung wie Fig. 8, jedoch mit einer geringfügigen Abwandlung.

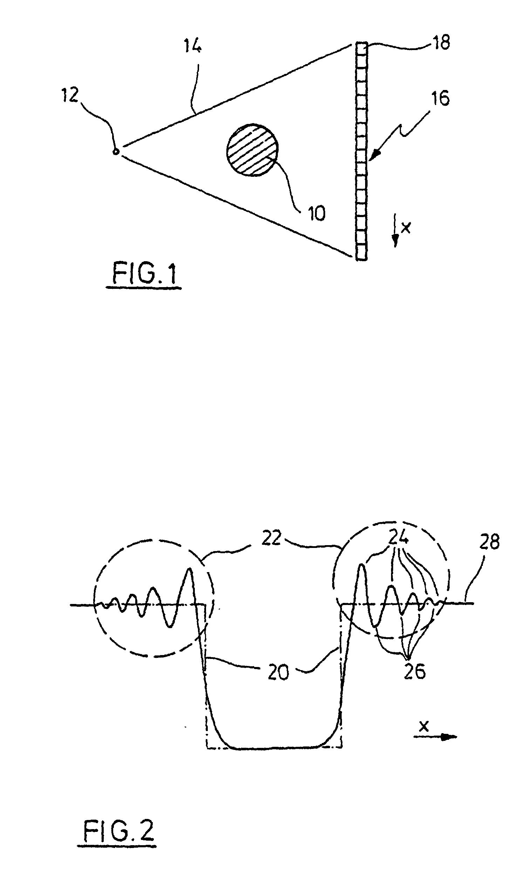

In Fig. 1 ist der Querschnitt eines Stranges, einer Ader oder eines Kabels 10 (nachfolgend wird als Meßobjekt ein Kabel beschrieben. Es versteht sich, daß auch jedes andere strangartige Objekt vermessen werden kann.), das sich senkrecht zur Zeichenebene erstreckt und vorbewegt wird, beispielsweise mit 10 mm/sec. bis 30 m/sec. Die Vorrichtung zur Herstellung des Kabels sowie zur Erzeugung seines Vorschubs sind nicht dargestellt. Sie sind allgemein bekannt. Das Kabel hat z. B. einen Durchmesser von 0,5 mm bis 100 mm und mehr.

Auf der linken Seite des Kabels 10 ist eine punktförmige Lichtquelle 12 zu erkennen. Sie kann von einer Laserdiode gebildet sein, die z. B. IR-Licht erzeugt. Die Punktförmigkeit ergibt sich vorzugsweise in der Ausdehnung, die in der Meßebene liegt, welche durch den Fächerstrahl 14 gekennzeichnet ist. In dieser Richtung ist z. B. die aktive Zone der Laserdiode 12 3 µm breit. Senkrecht dazu, d.h. parallel zur Längsachse des Kabels 10, kann sich eine Erstreckung der optisch aktiven Zone von z. B. 0,5 mm ergeben.

Auf der der Laserdiode 12 gegenüberliegenden Seite ist ein Zeilensensor 16 angedeutet, dessen Längsachse in der Bildebene liegt und senkrecht auf der Haupterstreckungsrichtung der Strahlung der Laserdiode 12. Die einzelnen Elemente 18 des Sensors, beispielsweise einer CCD-Zeile oder einer einzel nen Zeile einer CCD-Matrix, haben eine Erstreckung in der Bildebene von z. B. 12 µm und einen Abstand voneinander von etwa 14 µm. Die Zeile kann, wie an sich bekannt, mit z. B. 2048 Zellen oder Elementen versehen werden, wenn der Durchmesser des Stranges etwa maximal 15 mm beträgt.

Das Kabel 10 erzeugt einen Schatten auf dem Zeilensensor 16, dessen Ausdehnung für den Durchmesser des Kabels 10 repräsentativ ist. Die Ausdehnung des Schattens ist aufgrund des sich fächerförmig aufweitenden Strahlengangs nicht gleich dem Durchmesser des Kabels. Der Abstand der Längsachse des Kabels 10 zum Zeilensensor ist daher bei der Messung zu berücksichtigen, und zwar in der Art, daß die gemessene Schattenausdehnung mit einem sich aus dem Strahlensatz ableitenden Faktor (<1) zu multiplizieren ist. Da die Ersatzblende relativ zum Mittelpunkt des Kabelquerschnitts ebenfalls mit dem Abstand zwischen Lichtquelle 12 und Kabel 10 variiert, ist diese Abhängigkeit ebenfalls zu berücksichtigen.

An den Außenkanten des Kabels 10 erfährt das monochromatische Licht der Laserdiode 12 eine Beugung. Der daraus resultierende Intensitätsverlauf ist in Fig. 2 vereinfachend dargestellt. Der Verlauf des geometrischen Schattens, wie er sich ohne Beugungserscheinungen einstellen würde, ist gestrichelt eingezeichnet und mit 20 bezeichnet. Neben in den geometrischen Schattenbereich eingebeugtem Licht werden links bzw. rechts der geometrischen Schattengrenzen Intensitätsverläufe mit langsam abklingenden, abwechselnden aufeinanderfolgenden Intensitätsmaxima und -minima registriert. Dieses sich aufgrund von Laufzeitunterschieden (Interferenz) ergebende Muster wird Beugungssaum genannt. Die sich infolge Überlagerung einzelner Lichtstrahlen einstellenden Maxima sind mit 24, die auf Auslöschung beruhenden Minima mit 26 bezeichnet. Die Frequenz, mit der diese Maxima/Minima aufeinander folgen, ist vom Abstand zwischen beugender Kante und Sensorzeile abhängig. Der Intensitätsverlauf im Beugungssaum variiert um einen mittleren Pegel 28, wie er sich ohne Meßobjekt einstellen würde.

Die Geometrie aller an der Meßanordnung beteiligten Gegenstände ist derart, daß die Beugungssäume sich nicht gegenseitig störend beeinflussen.

Der Intensitätsverlauf, wie er in Fig. 2 zu erkennen ist, ist in seiner Form sowie in seiner Lage auf der Empfangszeile charakteristisch für die Position der Beugungskante im Meßraum. Die geometrische Schattengrenze auf der Empfangszeile läßt sich durch Vergleich mit theoretisch ermittelten Musterverläufen ermitteln, kann aber auch aus einzelnen charakteristischen Merkmalspunkten (z.B. Wendepunkte, Intensitätsmaxima oder -minima) im Beugungssaum bestimmt werden. Auch die Bestimmung des Meßgutdurchmessers, der die gemessene Schattenbreite auf der Empfangszeile verursacht, ist aus der in den Beugungssäumen enthaltenen Information möglich. Der Abstand zwischen beugender Kante und Empfangssensor drückt sich nämlich in der Dehnung des mit dem gemessenen Beugungsverlauf korrelierten Musterverlaufs bzw. in den Abständen zwischen charakteristischen Merkmalspunkten (z.B. Maxima, Minima, Wendepunkte oder dergleichen) im Beugungssaum aus.

Eine teilweise Verunreinigung der Laserdiode 12 und/oder der Sensorzeile 16 führt zu weiteren Beugungseffekten, die sich dem Kurvenverlauf nach Fig. 2 überlagern. Eine Beseitigung dieses Störeffekts besteht darin, nur solche Beugungssäume mit bestimmten Dehnungsfaktoren bzw. mit bestimmten Abständen der charakteristischen Merkmalspunkte auszuwerten. Unter Berücksichtigung des Frequenzspektrums, wie es durch Beugung am Kabel 10 innerhalb der gültigen Meßzone entsteht, läßt sich ferner durch Bandpaßfilterung die Messung schmutzunanfälliger machen. Alle Verfahren sind auch bei Verwendung von nicht gezeigten Schutzgläsern zwischen der Lichtquelle 12 und dem Kabel 10 einerseits und zwischen dem Kabel 10 und dem Zeilensensor 16 andererseits anwendbar.

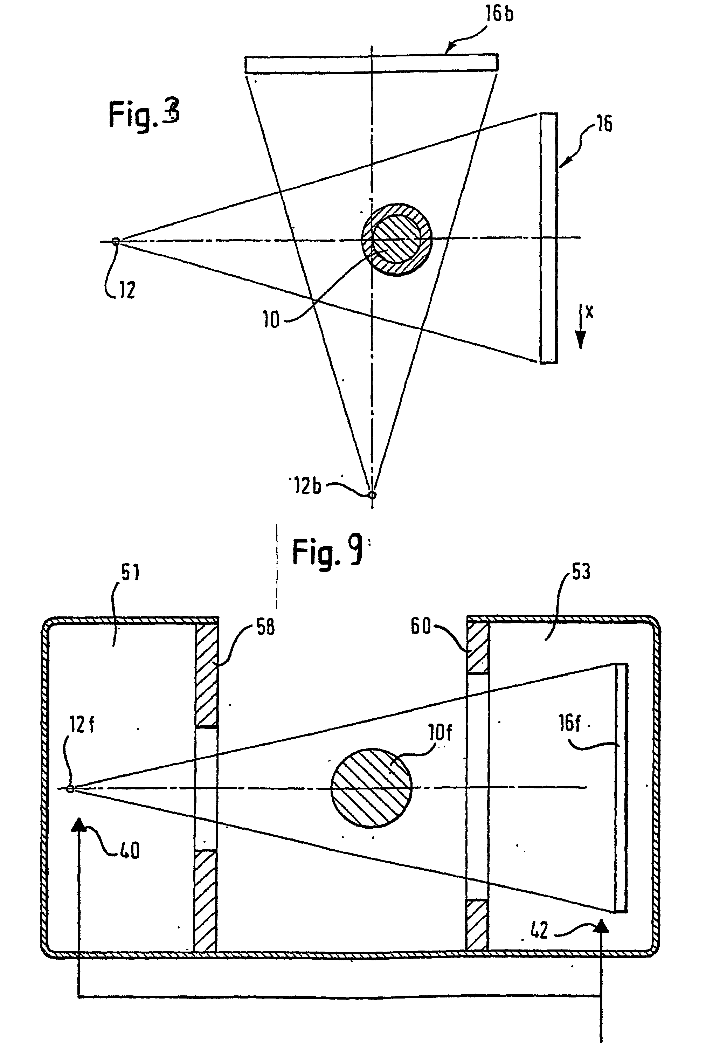

Es ist allgemein bekannt, die Genauigkeit der Durchmessermessung dadurch zu verbessern und die Ovalität des Stranges dadurch zu bestimmen, daß entlang zweier orthogonaler Achsen eine Messung vorgenommen wird. Dies kann auch mit einer weiteren Meßvorrichtung erfolgen, wie sie in Fig. 3 gezeigt ist und in einer um 90° verdrehten Anordnung vorgesehen ist. Auf diese Weise läßt sich dann nicht nur erfindungsgemäß der Durchmesser an zwei Stellen messen, sondern auch der Abstand zwischen Kabel 10 und Zeilensensor 16 bzw. 16b, der bei der Vorbewegung des Kabels naturgemäß Schwankungen unterliegt. Die Intensitätsverläufe in den Beugungssäumen beidseits des auf die Empfangszeile projizierten Kabelschattens sind annähernd symmetrisch. Somit kann z.B. aus den Positionen sich spiegelbildlich im linken bzw. rechten Beugungssaum gegenüberliegender Merkmalspunkte auf die Mittenposition des projizierten Schattens geschlossen werden. Auf der Verbindungslinie zwischen dieser Position und der Laserdiode 12 befindet sich das Kabel 10. Eine entsprechende Verbindungslinie kann für die um 90° gedrehte Meßanordnung konstruiert werden. Der Schnittpunkt beider Linien stellt die Mittenlage des Kabels 10 im Meßraum dar. Damit ist der Abstand zum jeweiligen Zeilensensor 16 bzw. 16a bekannt. Die Auswertevorrichtung, mit welcher die Durchmesserbestimmung erfolgt, kann daher ständig mit diesen Abstandswerten gespeist werden, damit erforderlichenfalls eine Korrektur stattfindet.

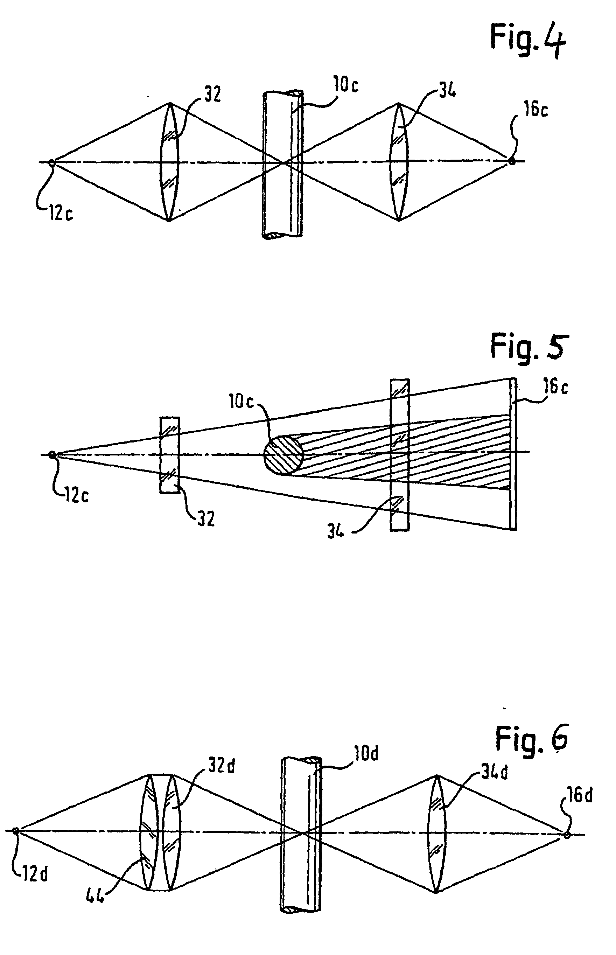

In der Ausführungsform nach Fig. 4 und 5 sind ein Kabel 10c, ein Zeilensensor 16c und Lichtquelle 12c gezeigt. Im gezeigten Fall sind außerdem Zylinderlinsen 32, 34 vorgesehen, wobei die Linse 32 die Strahlung der Lichtquelle etwa in der Mitte des Kabels 10c in einer Ebene strichförmig fokussiert. Quer zur Kabelachse ergibt sich eine linienartige Erstreckung der fächerförmigen Beleuchtung. Der sich einstellende Schatten ist in Fig. 5 schraffiert angedeutet.

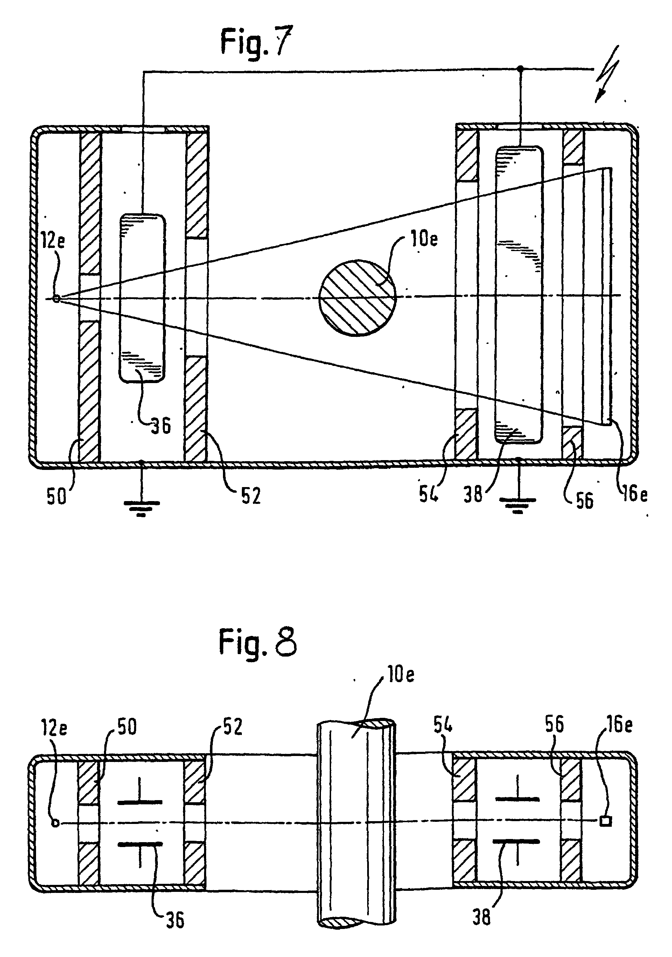

Zusätzlich oder alternativ zur Reduzierung der Schmutzempfindlichkeit auf elektronischem Wege können Mittel vorgesehen werden, die Verunreinigung im Sichtbereich des Meßsystems erst gar nicht entstehen lassen oder diese beseitigen. Dies kann zum Beispiel bei der Ausführungsform nach Fig. 7 bzw. 8 dadurch geschehen, daß in dem Bereich zwischen Laserdiode 12e einerseits und dem Kabel 10e andererseits bzw. zwischen Kabel 10e und CCD-Zeilensensor 16e Schlitzblenden 50, 52, 54, 56 und eine Elektrode 36 bzw. 38 angeordnet sind. Letztere liegen an Hochspannung. Der aus Laser 12e und den Schlitzblenden 50, 52 bestehende Teil der Meßvorrichtung bzw. der aus den Schlitzblenden 54, 56 und Sensorzeile 16e bestehende Teil können an Masse liegen. Mit Hilfe der Elektroden 36, 38 wird ein Anziehungseffekt auf Staubteilchen ausgeübt. Staub wird mithin aus dem eigentlichen Meßraum "abgesaugt".

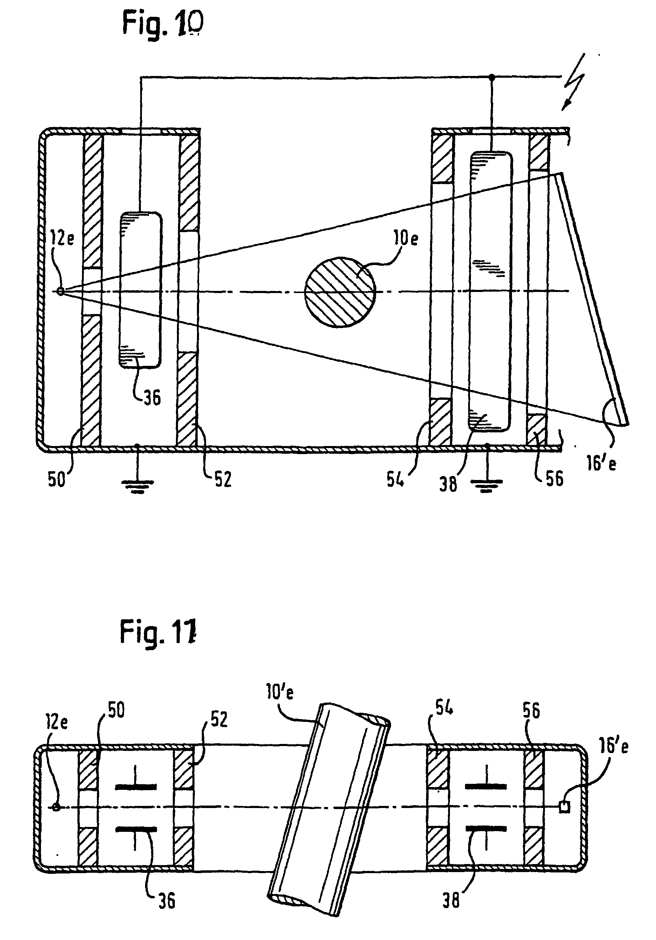

Eine weitere Möglichkeit, Verunreinigungen zu reduzieren, kann darin bestehen, die Meßräume 51 und 53 gemäß Fig. 9 mit Hilfe von Schlitzblenden 58, 60 sauber zu halten und ggf. unter einen gewissen Überdruck zu setzen. Dadurch werden Staubteilchen gehindert, in den Meßraum einzudringen.

Ferner kann mit Hilfe von geeigneten Düsen impulsweise Luft in den Meßraum geblasen werden, was durch Pfeile 40 bzw. 42 angedeutet ist. Mit Hilfe der Druckimpulse werden Verunreinigungen aus dem Meßraum herausgetrieben. Anstelle von Druckimpulsen können auch stetige Gasströme treten, die Verunreinigungen aus dem Meßraum heraustragen.

Es versteht sich, daß die beschriebenen Maßnahmen natürlich in gleicher Weise bei den Vorrichtungen nach den Figuren 1 bis 5 eingesetzt werden können. Das gleiche ist der Fall bei der noch zu beschreibenden Vorrichtung gemäß Fig. 8.

Der Unterschied zu der Ausführungsform nach den Figuren 4 und 5 besteht darin, daß vor der Zylinderlinse 33 eine Linse 44 angeordnet ist. Sie bewirkt eine Bündelung des Strahlengangs und steht im Gegensatz zum flächerförmigen Strahlengang nach der Ausführungsform in Fig. 4 und 5. Der Vorteil eines gebündelten Strahls wurde in Verbindung mit der Ausführungsform nach Fig. 3 beschrieben.

Die Genauigkeit des Meßsystems läßt sich noch steigern bei Kenntnis der genauen augenblicklichen Wellenlänge des Lichtes der Laserdiode. Die Wellenlänge des Lichts läßt sich aus dem Beugungssaum ermitteln, wobei der Abstand der Beugungskante zur Lichtquelle bzw. zum Sensor bekannt sein muß. Die Beugungskante kann die des zu messenden Stranges sein oder auch eine Referenzkante, die im Hinblick auf die Lichtquelle oder den Sensor genau positioniert ist.

Fig. 10 zeigt eine ähnliche Darstellung wie Fig. 7, so daß gleiche Teile mit gleichen Bezugszeichen versehen sind. Unterschiedlich ist lediglich die Anordnung des Sensors 16'e, der nicht senkrecht zur Hauptstrahlrichtung angeordnet ist, sondern mit einer gewissen Neigung. Die Berechnung des Durchmessers läßt sich ebenso durchführen wie auf oben beschriebene Art und Weise, wobei die Schrägstellung des Sensors 16'e entsprechend korrigiert werden muß. Die Schrägstellung hat unter Umständen den Vorteil, daß eine Verschmutzung leichter verhindert wird.

Die Ausführungsform nach Fig. 11 gleicht der nach Fig. 8 mit der Ausnahme, daß das Kabel 10'e oder die Ader nicht senkrecht zur Hauptstrahlrichtung sich erstreckt, sondern in einem Winkel.

Die Ausführungsformen nach den Figuren 10 und 11 sollen vor allen Dingen illustrieren, daß nicht obligatorisch ist, daß die Aderachse sich senkrecht zur Hauptstrahlrichtung erstrecken muß. Dies gilt auch für den Sensor 16'e.

## Patentansprüche

1. Verfahren zur Messung des Durchmessers eines im Querschnitt annähernd kreisförmigen Stranges, insbesondere einer Ader oder eines Kabels, mit folgenden Verfahrensschritten:
- Beleuchten des Stranges mit einem fächerförmigen Strahl mindestens einer monochromatischen, in der Meßebene annähernd punktförmigen Lichtquelle, wobei die Hauptstrahlrichtung vorzugsweise senkrecht auf der Längsachse des Stranges steht
- Empfangen des Lichtes auf einem ein- oder mehrzeiligen lichtempfindlichen Sensor auf der gegenüberliegenden Seite des Stranges, wobei die Achse des Sensors auf der Hauptstrahlrichtung vorzugsweise senkrecht steht
- Messen des Abstands des Stranges vom Sensor oder der Lichtquelle
- Bestimmung eines dem Strangdurchmesser entsprechenden Wertes durch Auswertung der Intensitätsverläufe in den Beugungssäumen an den Rändern des vom Strang verursachten Schattens und des gemessenen Durchmessers
- der Abstand der Lichtquelle vom Strang bzw. des Sensors zum Strang wird so gewählt, daß die Beugungswirkung von gegenüberliegenden Rändern des Stranges einander in der Ebene des Sensors nicht überlagern oder nur unwesentlich überlagern.

2. Verfahren nach Anspruch 1, **dadurch gekennzeichnet, daß** auf Schmutz zurückführbare Störungen im Intensitätsverlauf der Beugungssäume auf elektronischem Wege erkannt, korrigiert bzw. unterdrückt werden.

3. Verfahren nach Anspruch 1 oder 2, **dadurch gekennzeichnet, daß** aus den Intensitätsverläufen der gemessenen Beugungssäume die Lage der geometrischen Schattengrenzen ermittelt wird.

4. Verfahren nach Anspruch 1, 2 oder 3, **dadurch gekennzeichnet, daß** der gemessene Intensitätsverlauf in den Beugungssäumen und deren Lage mit einem Satz von gespeicherten Musterverläufen verglichen wird.

5. Verfahren nach Anspruch 4, **dadurch gekennzeichnet**, das ein Musterverlauf komprimiert oder gedehnt wird.

6. Verfahren nach Anspruch 1, 2 oder 3, **dadurch gekennzeichnet, daß** die Lage charakteristischer Merkmalspunkte in den gemessenen Beugungssäumen ausgewertet wird.

7. Verfahren nach einem der Ansprüche 1 bis 6, **dadurch gekennzeichnet, daß** zur Verringerung des Abstands von Lichtquelle und Strang eine optische Anordnung vorgesehen ist.

8. Verfahren nach einem der Ansprüche 1 bis 6, **dadurch gekennzeichnet, daß** keine den fächerförmigen Strahl verformenden oder ablenkenden optischen Elemente zwischen der Lichtquelle und dem Strang und/oder dem Strang und dem Sensor vorgesehen werden.

9. Verfahren nach Anspruch 1 bis 8, **dadurch gekennzeichnet, daß** der Abstand des Stranges vom Sensor aus dem Komprimierungs/Dehnungsgrad von mit dem gemessenen Intensitätsverlauf im Beugungssaum zur Deckung gebrachten Musterverläufen abgeleitet wird.

10. Verfahren nach Anspruch 1 bis 8, **dadurch gekennzeichnet, daß** der Abstand des Stranges vom Sensor aus charakteristischen Merkmalspunkten im Intensitätsverlauf der gemessenen Beugungssäume bestimmt wird.

11. Verfahren nach Anspruch 1 bis 8, **dadurch gekennzeichnet, daß** der Abstand mit Hilfe einer zweiten oder weiterer aus Punktlichtquelle und Zeilensensor bestehender Meßvorrichtungen gemessen wird.

12. Verfahren nach einem der Ansprüche 1 bis 11, **dadurch gekennzeichnet, daß** die aktive Zone der Lichtquelle parallel zur Längsachse des Stranges linienförmig ist.

13. Verfahren nach einem der Ansprüche 1 bis 12, **dadurch gekennzeichnet, daß** die Ausdehnung von lichtempfindlichen Elementen des Zcilensensors parallel zur Längsachse des Stranges signifikant größer ist als in Achsrichtung des Sensors.

14. Verfahren nach einem der Ansprüche 1 bis 13, **dadurch gekennzeichnet, daß** mehrere Punktlichtquellen verwendet werden.

15. Verfahren nach Anspruch 1 oder 2, **dadurch gekennzeichnet, daß** Störungen aufgrund von Verschmutzungen anhand eines Vergleichs der gemessenen Beugungssäume mit Musterverläufen erkannt sowie korrigiert oder unterdrückt werden.

16. Verfahren nach Anspruch 1 oder 2, **dadurch gekennzeichnet, daß** Störungen aufgrund von Verschmutzungen anhand der in den gemessenen Beugungssäumen vorliegenden Komprimierungs-/Dehnungsgrade erkannt, korrigiert oder unterdrückt werden.

17. Verfahren nach Anspruch 1 oder 2, **dadurch gekennzeichnet, daß** Störungen aufgrund von Verschmutzungen anhand der Abstände zwischen charakteristischen Merkmalspunkten innerhalb der gemessenen Beugungssäume erkannt sowie korrigiert oder unterdrückt werden.

18. Verfahren nach Anspruch 1 oder 2, **dadurch gekennzeichnet, daß** der gemessene Intensitätsverlauf derart gefiltert wird, daß nur diejenigen Beugungsmuster zur Auswertung gelangen, die in der gültigen Meßzone verursacht werden.

19. Verfahren nach einem der Ansprüche 1 bis 18, **dadurch gekennzeichnet, daß** mit Hilfe eines Hochspannungsfelds im Meßraum Verunreinigungen abgezogen werden.

20. Verfahren nach einem der Ansprüche 1 bis 18, **dadurch gekennzeichnet, daß** der Meßraum unter Überdruck gesetzt ist.

21. Verfahren nach einem der Ansprüche 1 bis 18, **dadurch gekennzeichnet, daß** in den Meßraum intervallweise ein Druckstoß geleitet wird zum Austragen von Verunreinigungen.

22. Verfahren nach einem der Ansprüche 1 bis 21, **dadurch gekennzeichnet, daß** die Wellenlänge der Lichtquelle ermittelt wird aus dem Beugungssaum der Beugungskante des zu messenden Stranges oder einer Referenz-Beugungskante und dem Abstand der Beugungskante zur Lichtquelle bzw. zum Empfangssensor.

23. Verfahren nach einem der Ansprüche 1 bis 22, **dadurch gekennzeichnet, daß** der linienförmige Sensor (16'e) zur Hauptstrahlungsrichtung der Lichtquelle (12e) geneigt ist.

24. Verfahren nach Anspruch 23, **dadurch gekennzeichnet, daß** zwei Anordnungen von Lichtquelle und Sensor im Umfangsabstand am Strang angeordnet sind derart, daß beide linienförmigen Sensoren in der Vertikalen liegen oder zur Horizontalen geneigt sind.

## Claims

1. A method for measuring the diameter of an elongated article approximately circular in cross section, in particular of a wire or of a cable, with the following method steps:
- illumination of the article with a fan-shaped beam of at least one monochromatic light source approximately point shaped in the measuring plane, wherein the main beam direction stands preferably perpendicular on the longitudinal axis of the article
- receiving the light on a single or multiple lined light-sensitive sensor on the oppositely lying side of the article, wherein the axis of the sensor stands preferably perpendicular on the main beam direction
- measuring the distance of the article to the sensor or the light source
- determining a value corresponding to the article diameter by evaluating the intensity courses in the diffraction margins at the edges of the shadow caused by the article and of the measured diameter
- the distance of the light source to the article or of the sensor to the article is selected such that the diffraction effect of oppositely lying edges of the article do not superimpose one another or only insignificantly superimpose one another in the plane of the sensor.

2. The method of claim 1, **characterised in that** disturbances which can be led back to dirt, in the intensity course of the diffraction margins, are by way of electronics recognised, corrected or suppressed.

3. The method according to claim 1 or 2, **characterised in that** from the intensity courses of the measured diffraction margins the position of the geometric shadow borders is determined.

4. The method according to claim 1, 2 or 3, **characterised in that** the measured intensity course in the diffraction margins and their position is compared with a set of stored sample patterns.

5. The method according to claim 4, **characterised in that** a sample pattern is compressed or extended.

6. The method according to claim 1, 2 or 3, **characterised in that** the position of characteristic feature points in the measured diffraction margins is evaluated.

7. The method according to one of claims 1 to 6, **characterised in that** for reducing the distance between the light source and the article an optical arrangement is provided.

8. The method according to one of the claims 1 to 6, **characterised in that** no optical elements deforming or deflecting the fan-shaped beam are provided between the light source and the article and/or the article and the sensor.

9. The method according to claim 1 or 8, **characterised in that** the distance of the article to the sensor is derived from the compression/extension degree of sample courses brought to coincide with the measured intensity course of the diffraction margin.

10. The method according to claim 1 to 8, **characterised in that** the distance of the article to the sensor is determined from characteristic feature points in the intensity course of the measured diffraction margins.

11. The method according to claim 1 to 8, **characterised in that** the distance is measured with the help of second or further measuring devices consisting of point light source and line sensor.

12. The method according to one of the claims 1 to 11, **characterised in that** the active zone of the light source parallel to the longitudinal axis of the article is linear.

13. The method according to one of the claims 1 to 12, **characterised in that** the extension of light-sensitive elements of the line sensor parallel to the longitudinal axis of the article is significantly greater than in the axial direction of the sensor.

14. The method according to one of the claims 1 to 13, **characterised in that** several point light sources are used.

15. The method according to claims 1 or 2, **characterised in that** disturbances on account of contaminations are recognised as well as corrected or suppressed by way of a comparison of the measured diffraction margins to sample courses.

16. The method according to claim 1 or 2, **characterised in that** disturbances on account of contaminations are recognised, corrected or suppressed by way of the compression/extension degrees present in the measured diffraction margins.

17. The method according to claim 1 or 2, **characterised in that** disturbances on account of contaminations are recognised, as well as corrected or suppressed by way of the distances between characteristic feature points within the measured diffraction margins.

18. The method according to claim 1 or 2, **characterised in that** the measured intensity course is filtered in a manner such that only those diffraction patterns which are caused in the valid measuring zone reach evaluation.

19. The method according to one of the claims 1 to 18, **characterised in that** with the help of a high voltage field in the measuring space, contaminations are removed.

20. The method according to one of the claims 1 to 18, **characterised in that** the measuring space is set under excess pressure.

21. The method according to one of the claims 1 to 18, **characterised in that** into the measuring space in an intervalled manner a pressure charge is introduced for removing contaminations.

22. The method according to one of the claims 1 to 21, **characterised in that** the wavelength of the light source is determined from the diffraction margin of the diffraction edge of the article to be measured or from a reference diffraction edge and the distance of the diffraction edge to the light source or to the receiving sensor.

23. The method according to one of the claims 1 to 22, **characterised in that** the linear sensor (16'e) is inclined to the main beam direction of the light source (12e).

24. The method according to claim 23, **characterised in that** two arrangements of a light-source and a sensor are circumferentially arranged at the article in a manner such that both linear sensors lie on a vertical line or are inclined to the horizontal.

## Revendications

1. Procédé permettant de mesurer le diamètre d'une tresse de section sensiblement circulaire, en particulier d'un brin ou d'un câble, présentant les étapes suivantes :
- éclairage de la tresse à l'aide d'un faisceau en éventail issu d'au moins une source lumineuse monochromatique et sensiblement ponctuelle dans le plan de mesure, la direction principale du faisceau s'étendant de préférence perpendiculairement à l'axe longitudinal de la tresse,
- réception de la lumière sur un détecteur photosensible à une ou à plusieurs lignes du côté opposé de la tresse, l'axe du détecteur s'étendant de préférence perpendiculairement à la direction principale du faisceau,
- mesure de la distance séparant la tresse du détecteur ou de la source lumineuse,
- détermination d'une valeur correspondant au diamètre de la tresse en évaluant l'allure des intensités observée dans les franges de diffraction formées sur les bords de l'ombre projetée par la tresse et du diamètre mesuré,
- la distance entre la source lumineuse et la tresse, ou entre le détecteur et la tresse, étant sélectionnée de manière que les effets de diffraction provoqués sur les bords opposés de la tresse ne se superposent pas ou se superposent seulement de manière négligeable sur le plan du détecteur.

2. Procédé selon la revendication 1, **caractérisé en ce que** les perturbations dans l'allure des intensités des franges de diffraction sont détectées et corrigées ou supprimées, par voie électronique.

3. Procédé selon la revendication 1 ou 2, **caractérisé en ce que** la position des limites d'ombre géométriques est déterminée à partir de l'allure des intensités des franges de diffraction mesurées.

4. Procédé selon la revendication 1, 2 ou 3, **caractérisé en ce que** l'allure des intensités mesurée dans les franges de diffraction et la position de ces dernières sont comparées à un ensemble d'allures-échantillon mises en mémoire.

5. Procédé selon la revendication 4, **caractérisé en ce qu'**une allure échantillon est comprimée ou dilatée.

6. Procédé selon la revendication 1, 2 ou 3, **caractérisé en ce que** la position de points de repère caractéristiques dans les franges de diffraction est évaluée.

7. Procédé selon l'une des revendications 1 à 6, **caractérisé en ce qu'**un dispositif optique est prévu dans le but de réduire la distance séparant la source lumineuse de la tresse.

8. Procédé selon l'une des revendications 1 à 6, **caractérisé en ce qu'**aucun élément optique déformant ou déviant le faisceau en éventail n'est prévu entre la source lumineuse et la tresse, ou entre la tresse et le détecteur.

9. Procédé selon les revendications 1 à 8, **caractérisé en ce que** la distance séparant la tresse du détecteur est déduite à partir du degré de compression/dilatation des allures-échantillon mises en coïncidence avec l'allure des intensités mesurée dans la frange de diffraction.

10. Procédé selon les revendications 1 à 8, **caractérisé en ce que** la distance séparant la tresse du détecteur est déterminée à partir de points de repère caractéristiques présents dans l'allure des intensités des franges de diffraction mesurées.

11. Procédé selon les revendications 1 à 8, **caractérisé en ce que** ladite distance est mesurée à l'aide d'un deuxième ou d'autres dispositifs de mesure consistant en une source lumineuse ponctuelle et en un détecteur de lignes.

12. Procédé selon l'une des revendications 1 à 11, **caractérisé en ce que** la zone active de la source lumineuse, considérée dans une direction parallèle à l'axe longitudinal de la tresse, présente la forme d'une ligne.

13. Procédé selon l'une des revendications 1 à 12, **caractérisé en ce que** la dilatation d'éléments photosensibles du détecteur de lignes est sensiblement supérieure dans le sens parallèle à l'axe longitudinal de la tresse que dans le sens de l'axe du détecteur.

14. Procédé selon l'une quelconque des revendications 1 à 13, **caractérisé en ce que** plusieurs sources lumineuses ponctuelles sont utilisées.

15. Procédé selon la revendication 1 ou 2, **caractérisé en ce que** les perturbations causées par des impuretés sont détectées et corrigées ou supprimées à l'aide d'une comparaison des franges de diffraction mesurées avec des allures-échantillon.

16. Procédé selon la revendication 1 ou 2, **caractérisé en ce que** les perturbations causées par des impuretés sont détectées et corrigées ou supprimées à l'aide des degrés de compression/dilatation présents dans les franges de diffraction mesurées.

17. Procédé selon la revendication 1 ou 2, **caractérisé en ce que** les perturbations causées par des impuretés sont détectées et corrigées ou supprimées à l'aide des distances séparant des points de repère caractéristiques à l'intérieur des franges de diffraction mesurées.

18. Procédé selon la revendication 1 ou 2, **caractérisé en ce que** l'allure des intensités mesurée est filtrée de manière à ce que seules les échantillons de diffraction engendrés à l'intérieur de la zone de mesure valable fassent l'objet d'une évaluation.

19. Procédé selon l'une des revendications 1 à 18, **caractérisé en ce que** des impuretés sont évacuées au moyen d'un champ électrique à haute tension établi dans l'espace de mesure.

20. Procédé selon l'une des revendications 1 à 18, **caractérisé en ce que** l'espace de mesure est mis en surpression.

21. Procédé selon l'une des revendications 1 à 18, **caractérisé en ce que** l'espace de mesure est soumis, par intervalles, à des à-coups de pression afin d'en évacuer les impuretés.

22. Procédé selon l'une des revendications 1 à 21, **caractérisé en ce que** la longueur d'onde de la source lumineuse est déterminée à partir de la frange de diffraction correspondant au bord de diffraction de la tresse à mesurer ou à un bord de diffraction de référence, ainsi qu'à partir de la distance séparant le bord de diffraction de la source lumineuse, ou du détecteur de réception.

23. Procédé selon l'une des revendications 1 à 22, **caractérisé en ce que** le détecteur en forme de ligne (16'e) est incliné par rapport à la direction principale du faisceau de la source lumineuse (12e).

24. Procédé selon la revendication 23, **caractérisé en ce que** deux dispositifs comprenant chacun une source lumineuse et un détecteur sont placés à une distance périphérique de la tresse, de manière que les deux détecteurs en forme de ligne se trouvent à la verticale ou soient inclinés par rapport à l'horizontale.
